(19) Europäisches Patentamt
European Patent Office
Office européen des brevets

(11) **EP 3 484 831 B1**

(12) **EUROPEAN PATENT SPECIFICATION**

(45) Date of publication and mention
of the grant of the patent:
**22.04.2020 Bulletin 2020/17**

(21) Application number: **17737576.3**

(22) Date of filing: **11.07.2017**

(51) Int Cl.:
*C04B 28/02* (2006.01)　　　*C04B 40/00* (2006.01)

(86) International application number:
**PCT/EP2017/067345**

(87) International publication number:
**WO 2018/011178 (18.01.2018 Gazette 2018/03)**

(54) **ETICS MORTAR COMPOSITION**

ETICS-MÖRTELZUSAMMENSETZUNG

COMPOSITION DE MORTIER À SYSTÈMES MIXTES POUR L'ISOLATION THERMIQUE EXTERNE (ETICS)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.07.2016 EP 16179435**

(43) Date of publication of application:
**22.05.2019 Bulletin 2019/21**

(73) Proprietor: **Nouryon Chemicals International B.V. 6824BM Arnhem (NL)**

(72) Inventor: **ABERLE, Thomas**
**CH-6207 Nottwil (CH)**

(74) Representative: **LKGlobal UK Ltd.**
**Cambridge House, Henry Street**
**Bath BA1 1BT (GB)**

(56) References cited:
**EP-A2- 0 160 267　　WO-A1-2014/093421**
**WO-A1-2015/023716　　WO-A1-2016/097371**
**GB-A- 2 029 813　　US-A1- 2009 218 545**
**US-A1- 2012 028 064　　US-A1- 2013 098 271**

**Description**

The present invention relates to an ETICS mortar composition, the use of the ETICS mortar composition, a process to prepare the ETICS mortar composition and an ETICS system comprising the ETICS mortar composition.

Addition of insulation especially to existing buildings is a challenge. Such additional insulation can help to reduce e.g. emissions of carbon dioxide and overall energy consumption of buildings. The external insulation of a building, such as an External Thermal Insulation Composite System (ETICS), in the following referred to as an ETICS system, results in a higher thermal mass of the inside of the building increasing the thermal comfort without reducing the size of the inside space compared to the building without ETICS system.

The ETICS system is built-up in layers comprising an a first mortar layer, such as an adhesive mortar layer, an insulation layer, a second mortar layer, e.g. a basecoat layer, a reinforcement layer, a third mortar layer, e.g. a further basecoat layer, and can comprise a topcoat layer. The ETICS system has to fulfill various requirements and needs, from weathering to mechanical resistance. The selection of the components of the ETICS system is thus complex and requires the proper selection of additives to meet the requirements of durable system components which are at the core of a sustainable and long lived external insulation.

The mortar comprising layers of the ETICS system are an essential part of the ETICS system. The durability and resistance to a number of factors are important for the longevity of the whole ETICS system. An adhesive mortar should provide high tensile bond strength for a reliable adhesion of the insulation board to a substrate, such as a wall. A base coat layer should withstand typical external influences, such as weathering, temperature changes warm-cold, freezing, dry-wet changes, sunshine, UV radiation, e.g. resulting from long-term outdoor exposure. In addition, the base coat layer should have an influence on the mechanical impact resistance of the ETICS system. Errors in the choice of mortars or mortar components can e.g. lead to a lack of adhesiveness of the ETICS system in part or as a whole, lack of impact resistance, blistering and/or delamination.

The ETICS comprises various materials; therefore, a visual inspection will not always be sufficient to determine the cause for potential problems of the design or workmanship. Thus, time-consuming and extensive tests are necessary to examine the mortar or mortar components of the ETICS system. It would therefore be desirable to provide a simple means to determine whether the intended ETICS mortar has been used.

WO2016097371 discloses an aqueous multicomponent adhesive system appropriate in the building and construction field of use.

US2013098271 discloses a dry mortar mixture based on at least one hydraulic and/or latently hydraulic binder.

It is therefore an object of the present invention to provide a simple means to determine whether the intended ETICS mortar has been used. It is a further object of the present invention to provide a simple means which does not influence the rheology and appearance of the uncured mortar and does not lead to visible changes in the color especially of the dried ETICS mortar. It is a further object of the present invention to provide a simple means which can be tested before and after the ETICS mortar is cured to produce its final structure.

These objects are met by the ETICS mortar composition according to the present invention, the ETICS system, the process to prepare the ETICS mortar composition according to the present invention, the use of the ETICS mortar composition according to the present invention and a method for determining the presence of an ETICS mortar composition according to the present invention.

ETICS Mortar composition

External thermal insulation composite system (ETICS) mortar composition comprising

- one or more hydraulically setting binders,
- at least one polymer selected from
  Vinyl-ester co-polymers containing one or more vinyl ester units and one or more monomer units selected from the group consisting of olefins, vinyl aromatics, vinyl halides, acrylic esters, methacrylic esters, monoesters or diesters of fumaric and/or maleic acid, and silicon-functional monomers,

characterized in that the ETICS mortar composition comprises at least one alpha-amino acid, an alpha-amino acid salt or a mixture thereof.

It has been found that the ETICS mortar composition according to the invention provides a simple means to determine that the intended ETICS mortar has been used. In the pH range of 4-8, the free alpha-amino group of the alpha-amino acid of the general formula R-CH(NH2)-COOH, alpha-amino acid salt or of the mixture thereof of the ETICS mortar composition according to the invention reacts with ninhydrin (2,2-dihydroxyindane-1,3-dione) to form Ruhemann's Purple (diketohydrindylidenediketohydrindamine).

Reaction equation

alpha-amino acid + 2 ninhydrin (uncolored) → $CO_2$ + aldehyde + Ruhemann's Purple + 3 $H_2O$

Proteins or reacted alpha-amino acids, such as amino acid crosslinkers, wherein the alpha-amino group forms part of a bond, do not form visibly detectable Ruhemann's purple in the amounts of proteins or reacted alpha-amino acids typically used in ETICS mortar compositions.

Suitable methods of detection of the purple color include visual inspection and recording the absorbance with a spectrophotometer at the wavelength of 570 nm such as e.g. a Medispec-III UV/VIS spectrophotometer, zero-set against a blank sample. The use of a spectrophotometer allows for additional confirmation e.g. in case of highly diluted samples or very small samples.

The alpha-amino acid has the overall formula R-CH(NH2)-COOH wherein R is an organic substituent, also known as a side-chain. Suitable organic substituents include H, linear or branched alkyl, cycloalkyl, heteroalkyl, heterocycloalkyl, aromatic, and heteroaromatic substituents. The organic substituents can be charged or uncharged polar substituents, or non-polar substituents.

The salt of the alpha-amino acid has a net charge. This net charge may depend on the pH of the ETICS mortar composition. The salt of the amino acid includes $R-CH(NH_3^+)-COOH$, $R-CH(NH_3^+)-COO^-$, and $R-CH(NH_2)-COO^-$. The side chains may further have a charge, said charge forms part of the net charge of the salt of the alpha-amino acid.

Suitable amino acids include Histidine, Alanine, Isoleucine, Arginine, Leucine, Asparagine, Lysine, Aspartic acid, Methionine, Cysteine, Phenylalanine, Glutamic acid, Threonine, Glutamine, Tryptophan, Glycine, Valine, Serine, Tyrosine, or mixtures thereof.

Suitable examples of salts of alpha-amino acids include Histidinate, Alaninate, Isoleucinate, Argininate, Leucinate, Asparaginate, Lysinate, Aspartate, Methioninate, Cysteinate, Selenocysteinate, Phenylalaninate, Glutamate, Threoninate, Glutaminate, Tryptophanate, Glycinate, Valinate, Serinate, Tyrosinate, or mixtures thereof. The salt of the alpha amino acid is preferably an alkali salt, earth alkali salt or a mixture thereof.

Suitable amounts of the at least one alpha-amino acid of the ETICS mortar composition include 0,001 wt% or more of the at least one alpha-amino acid, alpha-amino acid salt or of the mixture thereof, based on the total weight of the ETICS mortar composition. The ETICS mortar composition according to the invention has the additional advantage that already low amounts of amino acid can even be visibly detected.

Suitable amounts further include for example 0,001 wt% to 5 wt%, preferably 0,005 to 5 wt% of the at least one alpha-amino acid, alpha-amino acid salt or of the mixture thereof based on the total weight of the ETICS mortar composition. This has the additional advantage that the ETICS mortar composition according to the invention has overall comparable production costs compared to conventional ETICS mortar compositions. A further additional advantage is that an ETICS mortar slurry containing 0,001 to 5 wt% of the at least one alpha-amino acid, alpha-amino acid salt or of the mixture thereof has unaffected rheology characteristics compared to the ETICS mortar composition slurry not containing the alpha-amino acid. The ETICS mortar slurry in accordance with the present invention is an ETICS mortar composition mixed with water.

Inorganic binders are inorganic compounds holding solid particles together in a coherent mass. Suitable inorganic binders include hydraulically setting binders, latent hydraulic binders, pozzolanic binders, non-hydraulic binders, or mixtures thereof.

Hydraulically setting binders set in the presence of water and include cements. Suitable examples of hydraulically setting binders include Portland cement (CEM I, EN 197-1), blended Portland cements such as CEM II, CEM III, CEM IV, CEM V (EN 197-1), aluminate cements such as calcium aluminate cement (CAC), calcium-sulfo aluminate cement (CSA), fly ash, and calcium phosphate cement and mixtures thereof.

Latent hydraulic binders harden by the addition of an activator, usually lime and water. Suitable examples of latent hydraulic binders include fly ash, silico-calcareous cement and blastfurnace slag.

Pozzolanic binders are siliceous or silico-aluminous compounds, or a combination thereof. Pozzolanic binders harden in the presence of dissolved Ca(OH)2.

Suitable examples of pozzolanic binders include microsilica (also referred to as silica-fume), metakaolin, vitrified calcium alumino-silicate (VCAS), ground recycled glass pozzolans, burnt shale, diatomaceous earth, moler, rice husk ash, air cooled slag, calcium metasilicate, volcanic slag, volcanic tuff, volcanic ash, trass, and mixtures thereof.

Non-hydraulic inorganic binders do not harden in the presence of excess water. Suitable examples of non-hydraulic inorganic binders include calcium sulfate, calcium sulfate hemihydrate, anhydrite, quicklime, hydrated lime, magnesia cements, and mixtures thereof.

Co-polymers within the meaning of the invention include co-polymers comprising two or more different monomers or monomer units. Examples of suitable co-polymers include bipolymers, ter-polymers, and quaterpolymers.

Suitable vinyl ester monomers include vinyl esters of carboxylic acids having 1 to 15 C atoms. Preferred are vinyl acetate, vinyl propionate, vinyl butyrate, vinyl 2-ethylhexanoate, vinyl laurate, 1-methylvinyl acetate, vinyl pivalate, and vinyl esters of alpha-branched monocarboxylic acids having 9 to 11 C atoms, such as vinyl versatate, for example VeoVa™9, VeoVa™ 10, VeoVa™ 11 (trade names of the company Hexion).

Suitable examples of suitable vinyl ester co-polymers include co-polymers comprising one or more vinyl ester units and one or more monomer units from the group encompassing olefins, vinylaromatics, vinyl halides, acrylic esters, methacrylic esters, monoesters or diesters of fumaric and/or maleic acid, or silicon-functional monomers; Suitable examples of vinyl ester co-polymers include ethylene (E) vinyl acetate (VA) co-polymers (EVA polymers) and ter-polymers further comprising vinyl chloride (VC) (VA/E/VC polymers), or vinyl acetate (VA) versatate (VeoVa) based polymers such as (VA/VeoVa polymers).

Suitable monomers from the group of acrylic esters or methacrylic esters include esters of unbranched or branched alcohols having 1 to 15 C atoms. Preferred methacrylic esters or acrylic esters include methyl acrylate, methyl methacrylate, ethyl acrylate, ethyl methacrylate, propyl acrylate, propyl methacrylate, n-butyl acrylate, n-butyl methacrylate, tert-butyl acrylate, tert-butyl methacrylate, and 2-ethylhexyl acrylate. Particularly preferred are methyl acrylate, methyl methacrylate, n-butyl acrylate, tert-butyl acrylate, and 2-ethylhexyl acrylate.

Olefin monomers have the general formula $C_nH_{2n}$. Suitable olefin monomers include ethylene and propylene. Diene monomers are hydrocarbons containing two carbon double bonds. Suitable diene monomers include 1,3-butadiene and isoprene.

Suitable vinylaromatic monomers inlcude styrene, methylstyrene, and vinyltoluene.

Vinyl halide monomers are alkene monomers with at least one halide substituent bonded directly on one of the alkene carbons. Suitable halide substituents are Cl, Br, and/or I. A preferred vinyl halide is vinyl chloride.

Suitable examples of vinyl chloride co-polymers include olefins, such as ethylene or propylene, and/or vinyl esters, such as vinyl acetate, vinyl laurate, or vinyl esters of a branched carboxylic acid having 9 to 11 C atoms, and/or acrylic esters and/or methacrylic esters of alcohols with 1 to 15 C atoms, such as methyl acrylate and methyl methacrylate, ethyl acrylate, ethyl methacrylate, propyl acrylate, propyl methacrylate, n-butyl-acrylate, tert-butyl acrylate, n-butyl methacrylate, tert-butyl methacrylate, 2-ethylhexyl acrylate and/or monoesters or diesters of fumaric and/or maleic acid, such as the dimethyl, methyl tert-butyl, di-n-butyl, di-tert-butyl, and diethyl esters of maleic and/or fumaric acid.

Suitable vinyl chloride-ethylene co-polymers further include vinyl chloride-ethylene co-polymers containing 60 to 98 wt % of vinyl chloride units and 1 to 40 wt % of ethylene units, the amounts in wt % being based on the total weight of the co-polymer and adding up in each case to 100 wt %.

Suitable examples of silicon-functional monomers include silanes, polymethylhydrogensiloxanes, siloxane resins, polysilanes, organosilanols, disiloxanes, oligosiloxanes, polysiloxanes, and organosiliconates. Further suitable examples include vinylsilanes and methacryloxysilanes, such as acryloyloxypropyltri(alkoxy)silanes, methacryloyloxypropyltri(alkoxy)silanes, vinyltrialkoxysilanes, and vinylmethyldialkoxysilanes.

Suitable examples of co-polymers of one or more vinyl esters further include vinyl acetate, with 1 to 50 wt %, preferably 10 to 30 wt% of ethylene; co-polymers of vinyl acetate with 1 to 50 wt % of one or more further co-monomers from the group of vinyl esters having 1 to 12 C atoms in the carboxylic acid radical, such as vinyl propionate, vinyl laurate, vinyl esters of alpha-branched carboxylic acids having 9 to 11 C atoms such as VeoVa™ 9, VeoVa™ 10, VeoVa™ 11, and optionally 1 to 50 wt % of ethylene; co-polymers of one or more vinyl esters, 1 to 50 wt % of ethylene, and preferably 1 to 60 wt % of (meth)acrylic esters of unbranched or branched alcohols having 1 to 15 C atoms, more particularly n-butyl acrylate or 2-ethylhexyl acrylate; and co-polymers with 30 to 75 wt % of vinyl acetate, 1 to 30 wt % of vinyl laurate or vinyl esters of an alpha-branched carboxylic acid and 9 to 11 C atoms, and also 1 to 30 wt % of (meth)acrylic esters of unbranched or branched alcohols having 1 to 15 C atoms, such as n-butyl acrylate or 2-ethylhexyl acrylate, which also contain 1 to 40 wt % of ethylene; co-polymers with one or more vinyl esters, 1 to 50 wt % of ethylene, and 1 to 60 wt % of vinyl chloride, and the amounts in wt % add up to 100 wt % in each case.

The polymer is generally prepared in an aqueous medium and preferably by an emulsion or suspension polymerization process, such as the process described in DE-A 102008043988. Protective colloids and/or emulsifiers may be used during the polymerization. The obtained polymers are in the form of aqueous dispersions and can be converted, as described in DE-A 102008043988, into corresponding redispersible powders, e.g. by spray-drying. In this case, a drying aid may be used, in a total amount of 3% to 30% by weight, preferably 5% to 20% by weight, based on the polymeric constituents of the dispersion. Preferred drying aids are polyvinyl alcohols.

The polymer preferably has a glass transition temperature Tg of -20°C to +30°C, preferably -15°C to +25°C. The glass transition temperature Tg of the polymers can be calculated approximately in advance using the Fox equation (according to Fox T. G., Bull. Am. Phys. Soc. 1, p. 123 (1956))

$$1/Tg = X_A/Tg_A + X_B/Tg_B + \ldots + X_n/Tg_n,$$

where $X_n$ stands for the mass fraction (wt %/100) of the respective monomer n, and $Tg_n$ is the glass transition temperature, in Kelvin, of the homopolymer of the respective monomer n. Tg values for homopolymers are listed for example in Ullmann's Encyclopedia of Industrial Chemistry, VCH, Weinheim, Vol. A21 (1992), p. 169. The glass transition temperature Tg of the co-polymers can further be determined experimentally, for example by means of differential scanning calorimetry (DSC) by determining the Tg (Midpoint) of the co-polymer according to ASTM D3418-82(1988)e1.

The amount of the at least one polymer is preferably in the range of 0,5 to 30 wt%, preferably 0,5 to 20 wt%, based on the total weight of the ETICS mortar composition.

The ETICS mortar composition may comprise 0,001 wt% to 5 wt% of the at least one alpha-amino acid, alpha-amino acid salt or of the mixture thereof and 0,5 to 30 wt% of the at least one polymer based on the total weight of the ETICS mortar composition.

The ETICS mortar composition may be in dry form. Dry ETICS mortar compositions according to the invention have the additional advantage of easy storage and transport.

The ETICS mortar composition may further comprise one or more fillers. Suitable fillers include quartz sand, calcium carbonate, limestone, dolomite, basalt, perlite, vermiculite, clay, such as expanded or sintered clay, lime hydrate, silica sand, chalk, white lime hydrate, talc, mica, fumed silica, polystyrene granules, rubber granules, and mixtures thereof.

The ETICS mortar composition may further comprise one or more thickeners. Thickeners are rheology modifiers which increase the viscosity of the ETICS mortar slurry. Suitable thickeners include starch, starch ethers, cellulose ethers, and guar ethers. Cellulose ethers and the guar ethers are preferred and include alkyl, hydroxyalkyl and/or carboxymethyl ethers. Suitable alkyl groups include methyl, ethyl, propyl and/or C4- to C30- alkyl groups. Suitable hydroxyalkyl groups include hydroxyethyl and/or hydroxypropyl groups. The cellulose ethers or guar ethers have the additional advantage that they can further help to control ETICS mortar slurry properties including water demand, workability, open time and water retention during the application of the ETICS mortar slurry.

The ETICS mortar composition according to the invention may further optionally comprise hydrophobizing additives. Hydrophobizing additives provide protection for the cured ETICS mortar against high surface tension fluids, in particular against water. Suitable hydrophobizing additives include organosilicon compounds, such as alkyl-trialkoxysilanes and/or dialkyldialkoxysilanes. Examples of suitable alkyl groups include C6- to C12-alkyl groups. Examples of suitable alkoxy groups include methoxy, ethoxy, propoxy and/or a butoxy group. Further suitable hydrophobizing additives include fatty acids, fatty acid salts, and fatty acid derivatives.

The ETICS mortar composition according to the invention preferably contains essentially no proteins, in particular no casein, meaning that the ETICS mortar composition preferably contains less than 0,5 wt% of protein, preferably less than 0,5 wt% of casein, based on the total weight of the ETICS mortar composition.

ETICS system comprising the ETICS mortar composition according to the invention

The invention further relates to an ETICS system comprising:

a) a first ETICS mortar layer
b) an insulation layer
c) a second ETICS mortar layer
d) a reinforcement layer
e) a third ETICS mortar layer,

wherein at least one ETICS mortar layer comprises the ETICS mortar composition according to the invention.

Suitable examples of the ETICS mortar composition for the first ETICS mortar layer a) further include an ETICS mortar composition according to the invention comprising 0,1 to 0,5 wt% thickener and 0,5 to 20 wt% of the polymer based on the total weight of the first mortar layer a). This embodiment is particularly suitable as an adhesive coat mortar, thus it is particularly suitable for the adhesion of the insulation layer b) to a substrate. Suitable substrates include walls, floors, and ceilings. Examples of suitable substrates include wooden walls, mineral walls, such as concrete walls and brick walls, concrete floors, wooden floors, and concrete ceilings, and wooden ceiling.

Suitable insulation layers b) include polystyrene boards, polyurethane boards, phenolic boards, isocyanurate boards, and mineral wool.

Suitable examples of the ETICS mortar compositions according to the invention for the second ETICS mortar layer c) also include the ETICS mortar composition of the first mortar layer a). A further suitable example of an ETICS mortar composition according to the invention for the second ETICS mortar layer c) comprises 0,1 to 0,5 wt% thickener and 1,0 to 30 wt% of the polymer based on the total weight of the first mortar layer a). This embodiment is particularly suitable as a base coat mortar, thus it is particularly suitable for the embedding of the reinforcement layer d). It is further particularly suitable for impact resistance, weathering resistance, temperature changes and UV resistance purposes.

Suitable reinforcement layers d) include a glass fiber mesh, metal net, metal mesh and plastic mesh. The reinforcement layer is embedded in the ETICS system to further protect the insulating layer against impact.

Suitable examples of the ETICS mortar compositions according to the invention for the third ETICS mortar layer e) also include the ETICS mortar composition of the first ETICS mortar layer a) and/or of the second ETICS mortar layer c).

The mortar layers a), c), and e) can have the same composition or a different composition.

Optionally, the ETICS system can further comprise a finishing layer (top coat) to provide weather proofing, decoration and/or additional impact or abrasion resistance.

The ETICS system may further optionally comprise anchors for mechanical fixing.

Process to make the ETICS mortar composition according to the invention

Process for preparing an ETICS mortar composition according to the invention comprises the step of adding at least one alpha-amino acid, alpha-amino acid salt or the mixture thereof to the one or more inorganic binders, and/or to the at least one polymer prior to mixing the one or more binders and the at least one polymer. The at least one alpha-amino acid and/or the mixture thereof may further be added to a mixture of the one or more inorganic binders and the at least one polymer.

The ETICS mortar composition according to the invention has various uses in ETICS applications, including the use in wall ETICS applications, floor ETICS applications, ceiling ETICS applications, indoor ETICS applications and/or outdoor ETICS applications, further including the use as an adhesive mortar and/or base coat mortar and/or top coat mortar.

EXAMPLES

**Ninhydrin Test**

**Ninhydrin solution preparation.**

For the Ninhydrin test Ninhydrin puriss. from Riedel-de Haen was used. A 1 wt% aqueous solution of Ninhydrin was prepared for the tests by dissolving 1 wt% Ninhydrin puriss. in deionized water based on the total weight of the Ninhydrin solution.

**Dry ETICS mortar composition base mix**

Table 1 - Dry ETICS mortar composition base mix

| CEM I 52.5N (Milke Classic) | 35 wt% based on the total weight of the ETICS mortar composition base mix |
|---|---|
| Quartz sand 0.1 - 0.6 mm | 64.75% based on the total weight of the ETICS mortar composition base mix |
| Cellulose ether Bermocoll M 30 | 0.25% based on the total weight of the ETICS mortar composition base mix |

**Preparation of the ETICS mortar composition for testing**

ETICS mortar compositions were prepared by mixing 100g of the dry ETICS mortar composition base mix with varying amounts of glycine. In addition, no or varying amounts of varying polymers were added. The amounts and the polymers tested are listed below in the tables.

Comparative examples of ETICS mortar composition comprise no or varying amounts of varying polymers but do not contain glycine (blank sample). The comparative examples are referred to as blank sample in the tables below.

**Ninhydrin test for alpha-amino acids in ETICS mortar compositions**

**Sample preparation**

30g of the dry ETICS mortar composition were mixed with 30g deionized water and left standing for 30 minutes. A 5 ml sample was taken of the clear supernatant. The pH of the sample was adjusted to pH 7 using 0,1 mol/l HCl (from Merck ("Titrisol")). 1ml of the pH 7 supernatant was added to 1ml ninhydrin solution and heated in a 90 °C water bath for 2-3 minutes. The sample was inspected visually for the formation of Ruhemann's purple indicating the presence of glycine in the sample.

**Ninhydrin reaction**

Positive ninhydrin reaction results (referred to as ninhydrin test results) are listed as purple, negative ninhydrin reaction results are listed as uncolored in the tables below.

**Comparison of ETICS mortar compositions containing 0 wt% glycine and various amounts of glycine**

**EVA polymer Tg (Midpoint -5 °C (DSC)**

The ETICS mortar composition contained 2 wt% of an EVA redispersible polymer powder, Tg (Midpoint -5 °C (DSC, Perkin Elmer, Type: Pyris 6 DSC, heating rate: 10 K/min).

The amount of glycine is based on the total weight of the ETICS mortar composition. The amounts are listed in Table 2. The glycine was not visible to the eye in the ETICS mortar composition by visible inspection prior to adding the ninhydrin solution. The addition of the glycine thus did not lead to visible changes in the color of the ETICS mortar composition.

Table 2

| Amount of glycine in wt% | Ninhydrin test results |
|---|---|
| 0 (Blank sample) | Uncolored |
| 0.05 | Purple |
| 0.03 | Purple |
| 0.02 | Purple |
| 0.01 | Purple |

The ninhydrin test results show that low amounts of glycine can be determined by visual inspection.

**Ninhydrin test of a dry ETICS mortar composition and of said ETICS mortar composition after curing**

The dry ETICS mortar composition was tested as described above under Ninhydrin test for alpha-amino acids in mortar.

Various amounts of glycine were added to the ETICS mortar composition as listed in Table 3 below. Further, various amounts of an EVA polymer powder, Tg (Midpoint -5 °C (DSC)) were added as listed in Table 3 below.

**The cured ETICS mortar composition was prepared as follows:**

Samples of the resulting dry ETICS mortar compositions were mixed with 20 wt% of water based on the total weight of the dry ETICS mortar composition. The resulting ETICS mortar slurry was applied on a PE sheet and allowed to cure and dry for 7 days at 23 °C, 50% relative humidity. Thereafter, the samples were ground and tested as described above under Ninhydrin test for alpha-amino acids in mortar. As before, the glycine was not visible to the eye in the cured ETICS mortar composition by visible inspection prior to adding the ninhydrin solution. The addition of the glycine thus did not lead to visible changes in the color of the cured ETICS mortar composition.

Table 3

| Amount of glycine and amount of casein in wt% | Amount of EVA polymer in wt% | Ninhydrin test result of Dry ETICS mortar composition | Ninhydrin test result of Cured ETICS mortar composition |
|---|---|---|---|
| 0 (Blank sample) | 0 | Uncolored | Uncolored |
| 0,03 Glycine | 2 | Purple | Purple |
| 0,05 Glycine | 3 | Purple | Purple |
| 0,1 Glycine | 0 | Purple | Purple |
| 0,5 Casein (comparative sample) | 0 | Uncolored | Uncolored |

The ninhydrin test results show the presence of the glycine both in the dry ETICS mortar composition and in the cured ETICS mortar composition.

In addition, a mortar containing 0,5 wt% casein instead of glycine was tested. The ninhydrin test result was negative.

### Ninhydrin test including the optional concentration step

The ETICS mortar composition contained 2 wt% EVA polymer powder Tg (Midpoint) -5 °C (DSC) based on the total weight of the ETICS mortar composition.

Various amounts of glycine, based on the total weight of the ETICS mortar composition were added as listed below in Table 4. The glycine was not visible to the eye in the ETICS mortar composition by visible inspection prior to adding the ninhydrin solution. The addition of the glycine thus did not lead to visible changes in the color of the ETICS mortar composition.

For the ninhydrin test including the optional concentration step, 100g of the dry ETICS mortar composition were mixed with 100g deionised water and left standing for 30 minutes. A 20 ml sample was taken of the clear supernatant. The pH of the sample was adjusted to pH 7 using 0,1 mol/l HCl.

The pH 7 supernatant was concentrated using a rotary evaporator (Büchi Rotavapor R-124 equipped with Büchi waterbath B-480) to 10% of the original volume.

1ml of the concentrated pH 7 supernatant was added to 1ml ninhydrin solution and heated in a 90 °C water bath for 2-3 minutes. The samples were inspected visually for the formation of Ruhemann's purple indicating the presence of glycine in the sample.

Table 4

| Amount of glycine in wt% | Ninhydrin test results |
|---|---|
| 0.01 | Purple |
| 0.005 | Purple |

The ninhydrin test results show that low amounts of glycine can be determined by visual inspection.

### ETICS mortar composition containing a VA / VeoVa Polymer

The ETICS mortar composition was prepared by adding 2 wt%, based on the total weight of the ETICS mortar composition, of VA / VeoVa polymer powder Tg (Midpoint) of + 18°C to the ETICS mortar composition base mix.

Various amounts of glycine were added, the amounts in wt% based on the total weight of the ETICS mortar composition are listed in Table 5. The glycine was not visible to the eye in the ETICS mortar composition by visible inspection prior to adding the ninhydrin solution. The addition of the glycine thus did not lead to visible changes in the color of the ETICS mortar composition.

Table 5

| Amount of glycine in wt% | Ninhydrin test results |
|---|---|
| 0.009 | Purple |
| 0.017 | Purple |
| 0.03 | Purple |
| 0.085 | Purple |

### ETICS mortar composition containing a VA / E / VC Polymer

The ETICS mortar composition was prepared by adding 2 wt%, based on the total weight of the ETICS mortar composition, of a VA / E / VC polymer powder Tg (Midpoint) of + 15°C (DSC) to the ETICS mortar composition base mix.

Various amounts of glycine were added, the amounts in wt% based on the total weight of the ETICS mortar composition are listed in Table 6. The glycine was not visible to the eye in the ETICS mortar composition by visible inspection prior to adding the ninhydrin solution. The addition of the glycine thus did not lead to visible changes in the color of the ETICS mortar composition.

Table 6

| Amount of glycine in wt% | Ninhydrin test results |
|---|---|
| 0 | Uncolored |
| 0.05 | Purple |
| 0.5 | Purple |

The ninhydrin test results show that low amounts of glycine can be determined by visual inspection.

It has further been shown that the alpha-amino acid glycine is a simple means to determine whether the intended ETICS mortar has been used by distinguishing the ETICS mortar containing the glycine from an ETICS mortar not containing an alpha-amino acid.

**Claims**

1. External thermal insulation composite system (ETICS) mortar composition comprising

   • one or more inorganic binders,
   • at least one polymer selected from vinyl-ester co-polymers containing one or more vinyl ester units and one or more monomer units selected from the group consisting of olefins, vinyl aromatics, vinyl halides, acrylic esters, methacrylic esters, monoesters or diesters of fumaric and/or maleic acid, and silicon-functional monomers,

   **characterized in that** the ETICS mortar composition comprises at least one alpha-amino acid, an alpha-amino acid salt or a mixture thereof.

2. ETICS mortar composition according to claim 1, wherein the composition further comprises one or more fillers selected from quartz sand, calcium carbonate, limestone, dolomite, basalt, perlite, vermiculite, clay, lime hydrate, silica sand, chalk, white lime hydrate, talc, mica, fumed silica, polystyrene granules, rubber granules, and mixtures thereof.

3. ETICS mortar composition according to any of the preceding claims, wherein the composition further comprises one or more thickeners selected from starch, starch ether, cellulose ether, and guar ether, and mixtures thereof.

4. ETICS mortar composition according to any of the preceding claims, wherein the composition comprises 0,001 wt% - 5 wt% of the at least one alpha-amino acid, an alpha-amino acid salt or a mixture thereof based on the total weight of the ETICS mortar composition.

5. ETICS mortar composition according to any of the preceding claims, wherein the composition comprises 0,5 to 20 wt% of the at least one polymer based on the total weight of the ETICS mortar composition.

6. ETICS mortar composition according to any of the preceding claims, wherein the inorganic binder is selected from hydraulically setting binders, latent hydraulic binders, pozzolanic binders, and non-hydraulic binders, and mixtures thereof.

7. ETICS mortar composition according to any of the preceding claims, wherein the polymer has a glass transition temperature Tg (Midpoint) of -20°C to +30°C.

8. ETICS system comprising:

   a) a first ETICS mortar layer
   b) an insulation layer
   c) a second ETICS mortar layer
   d) a reinforcement layer
   e) a third ETICS mortar layer,

**characterized in that** at least one ETICS mortar layer comprises the ETICS mortar composition according to claims 1 to 7.

9. ETICS system according to claim 8, wherein the insulation layer is selected from polystyrene boards, polyurethane boards, phenolic boards, isocyanurate boards, and mineral wool.

10. ETICS system according to claim 8 or 9, wherein the reinforcement layer is selected from glass fiber mesh, metal net, metal mesh and plastic mesh.

11. Process for preparing an ETICS mortar composition according to claims 1 to 7, comprising the step of adding at least one alpha-amino acid, alpha-amino acid salt, or a mixture thereof to the one or more inorganic binders, and/or to the at least one polymer, prior to mixing the one or more binders and the at least one polymer, and/or a mixture of the one or more inorganic binders and at least one polymer.

12. Use of an ETICS mortar composition according to claims 1 to 7 in ETICS applications.

13. Use of an ETICS mortar composition according to claim 12 in wall ETICS applications, floor ETICS applications, ceiling ETICS applications, indoor ETICS applications and/or outdoor ETICS applications.

14. Use of an ETICS mortar composition according to claim 12 as an adhesive mortar, a base coat mortar, and/or a top coat mortar.


**Patentansprüche**

1. Mörtelzusammensetzung für ein Wärmedämmverbundsystem (WDVS), umfassend

   • ein oder mehrere anorganische Bindemittel,
   • mindestens ein Polymer, ausgewählt aus Vinylester-Copolymeren, die eine oder mehrere Vinylestereinheiten enthalten, und ein oder mehrere Monomereinheiten, ausgewählt aus der Gruppe bestehend aus Olefinen, Vinylaromaten, Vinylhalogeniden, Acrylestern, Methacrylestern, Monoestern oder Diestern von Fumar-und/oder Maleinsäure und siliciumfunktionellen Monomeren,

   **dadurch gekennzeichnet, dass** die WDVS-Mörtelzusammensetzung mindestens eine alpha-Aminosäure, ein alpha-Aminosäuresalz oder eine Mischung davon umfasst.

2. WDVS-Mörtelzusammensetzung nach Anspruch 1, wobei die Zusammensetzung ferner einen oder mehrere Füllstoffe umfasst, ausgewählt aus Quarzsand, Calciumcarbonat, Kalkstein, Dolomit, Basalt, Perlit, Vermiculit, Ton, Kalkhydrat, Quarzsand, Kreide, weißem Kalkhydrat, Talk, Glimmer, Quarzstaub, Polystyrolgranulat, Kautschukgranulat und Mischungen davon.

3. WDVS-Mörtelzusammensetzung nach einem der vorhergehenden Ansprüche, wobei die Zusammensetzung ferner ein oder mehrere Verdickungsmittel umfasst, ausgewählt aus Stärke, Stärkeether, Celluloseether und Guarether und Mischungen davon.

4. WDVS-Mörtelzusammensetzung nach einem der vorhergehenden Ansprüche, wobei die Zusammensetzung 0,001 Gew.-% - 5 Gew.-% der mindestens einen alpha-Aminosäure, des mindestens einen alpha-Aminosäuresalzes oder einer Mischung davon, bezogen auf das Gesamtgewicht der WDVS-Mörtelzusammensetzung, umfasst.

5. WDVS-Mörtelzusammensetzung nach einem der vorhergehenden Ansprüche, wobei die Zusammensetzung 0,5 bis 20 Gew.-% des mindestens einen Polymers, bezogen auf das Gesamtgewicht der WDVS-Mörtelzusammensetzung, umfasst.

6. WDVS-Mörtelzusammensetzung nach einem der vorhergehenden Ansprüche, wobei das anorganische Bindemittel ausgewählt ist aus hydraulisch abbindenden Bindemitteln, latent hydraulischen Bindemitteln, puzzolanischen Bindemitteln und nichthydraulischen Bindemitteln und Mischungen davon.

7. WDVS-Mörtelzusammensetzung nach einem der vorhergehenden Ansprüche, wobei das Polymer eine Glasübergangstemperatur Tg (Mittelpunkt) von -20 °C bis +30 °C aufweist.

8.  WDVS-System, umfassend:

    a) eine erste WDVS-Mörtelschicht
    b) eine Isolierschicht
    c) eine zweite WDVS-Mörtelschicht
    d) eine Verstärkungsschicht
    e) eine dritte WDVS-Mörtelschicht

    **dadurch gekennzeichnet, dass** mindestens eine WDVS-Mörtelschicht die WDVS-Mörtelzusammensetzung nach den Ansprüchen 1 bis 7 umfasst.

9.  WDVS-System nach Anspruch 8, wobei die Isolierschicht ausgewählt ist aus Polystyrolplatten, Polyurethanplatten, Phenolplatten, Isocyanuratplatten und Mineralwolle.

10. WDVS-System nach Anspruch 8 oder 9, wobei die Verstärkungsschicht ausgewählt ist aus Glasseidengewebe, Metallnetz, Metallgewebe und Kunststoffgewebe.

11. Verfahren zur Herstellung einer WDVS-Mörtelzusammensetzung nach den Ansprüchen 1 bis 7, umfassend den Schritt zum Zugeben mindestens einer alpha-Aminosäure, mindestens eines alpha-Aminosäuresalzes oder einer Mischung davon zu dem einen oder den mehreren anorganischen Bindemitteln und/oder zu dem mindestens einen Polymer, vor dem Mischen des einen oder der mehreren Bindemittel und dem mindestens einen Polymer, und/oder einer Mischung des einen oder der mehreren anorganischen Bindermittel und mindestens einem Polymer.

12. Verwendung einer WDVS-Mörtelzusammensetzung nach den Ansprüchen 1 bis 7 in WDVS-Anwendungen.

13. Verwendung einer WDVS-Mörtelzusammensetzung nach Anspruch 12 in WDVS-Wandanwendungen, WDVS-Bodenanwendungen, WDVS-Deckenanwendungen, WDVS-Anwendungen im Innenbereich und/oder WDVS-Anwendungen im Außenbereich.

14. Verwendung einer WDVS-Mörtelzusammensetzung nach Anspruch 12 als Klebemörtel, Grundputzmörtel und/oder Deckputzmörtel.

**Revendications**

1.  Composition de mortier d'un système composite d'isolation thermique extérieure (ETICS) comprenant

    • un ou plusieurs liants inorganiques,
    • au moins un polymère sélectionné parmi les co-polymères d'ester vinylique contenant un ou plusieurs motifs esters vinyliques et un ou plusieurs motifs monomères sélectionnés dans le groupe constitué par les oléfines, les composés aromatiques vinyliques, les halogénures vinyliques, les esters acryliques, les esters méthacryliques, les monoesters ou les diesters d'acide fumarique et/ou maléique et les monomères fonctionnels à base de silicium,

    **caractérisée en ce que** la composition de mortier ETICS comprend au moins un acide alpha-aminé, un sel d'acide alpha-aminé ou un mélange de ceux-ci.

2.  Composition de mortier ETICS selon la revendication 1, dans laquelle la composition comprend en outre une ou plusieurs charges sélectionnées parmi le sable de quartz, le carbonate de calcium, le calcaire, la dolomie, le basalte, la perlite, la vermiculite, l'argile, l'hydrate de chaux, le sable de silice, la craie, l'hydrate de chaux blanche, le talc, le mica, la silice fumée, les granules de polystyrène, les granules de caoutchouc, et des mélanges de ceux-ci.

3.  Composition de mortier ETICS selon l'une quelconque des revendications précédentes, dans laquelle la composition comprend en outre un ou plusieurs épaississants sélectionnés parmi l'amidon, l'éther d'amidon, l'éther de cellulose et l'éther de guar, et des mélanges de ceux-ci.

**4.** Composition de mortier ETICS selon l'une quelconque des revendications précédentes, dans laquelle la composition comprend de 0,001 % en poids à 5 % en poids de l'au moins un acide alpha-aminé, un sel d'acide alpha-aminé ou un mélange de ceux-ci sur la base du poids total de la composition de mortier ETICS.

**5.** Composition de mortier ETICS selon l'une quelconque des revendications précédentes, dans laquelle la composition comprend de 0,5 à 20 % en poids de l'au moins un polymère sur la base du poids total de la composition de mortier ETICS.

**6.** Composition de mortier ETICS selon l'une quelconque des revendications précédentes, dans laquelle le liant inorganique est sélectionné parmi les liants à prise hydraulique, les liants hydrauliques latents, les liants pouzzolaniques et les liants non hydrauliques, et des mélanges de ceux-ci.

**7.** Composition de mortier ETICS selon l'une quelconque des revendications précédentes, dans laquelle le polymère a une température de transition vitreuse Tg (point médian) de -20 °C à +30 °C.

**8.** Système ETICS comprenant :

    a) une première couche de mortier ETICS
    b) une couche isolante
    c) une deuxième couche de mortier ETICS
    d) une couche de renforcement
    e) une troisième couche de mortier ETICS,

**caractérisé en ce qu'**au moins une couche de mortier ETICS comprend la composition de mortier ETICS selon les revendications 1 à 7.

**9.** Système ETICS selon la revendication 8, dans lequel la couche isolante est sélectionnée parmi les plaques de polystyrène, les plaques de polyuréthane, les plaques phénoliques, les plaques d'isocyanurate et la laine minérale.

**10.** Système ETICS selon la revendication 8 ou 9, dans lequel la couche de renforcement est sélectionnée parmi un treillis de fibres de verre, un filet métallique, un treillis métallique et un treillis en plastique.

**11.** Procédé de préparation d'une composition de mortier ETICS selon les revendications 1 à 7, comprenant l'étape d'ajout d'au moins un acide alpha-aminé, un sel d'acide alpha-aminé ou un mélange de ceux-ci, au ou aux liants inorganiques, et/ou à l'au moins un polymère, avant de mélanger le ou les liants et l'au moins un polymère, et/ou d'un mélange du ou des liants inorganiques et d'au moins un polymère.

**12.** Utilisation d'une composition de mortier ETICS selon les revendications 1 à 7 dans des applications ETICS.

**13.** Utilisation d'une composition de mortier ETICS selon la revendication 12 dans des applications ETICS pour parois, des applications ETICS pour sols, des applications ETICS pour plafonds, des applications ETICS pour l'intérieur et/ou des applications ETICS pour l'extérieur.

**14.** Utilisation d'une composition de mortier ETICS selon la revendication 12 comme mortier adhésif, mortier de revêtement de base et/ou mortier de finition.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2016097371 A
- US 2013098271 A
- DE 102008043988 A

### Non-patent literature cited in the description

- **FOX T. G.** *Bull. Am. Phys. Soc.,* 1956, vol. 1, 123
- Ullmann's Encyclopedia of Industrial Chemistry. VCH, 1992, vol. A21, 169